# EUROPÄISCHE PATENTSCHRIFT

(11) **EP 0 960 466 B1**
(45) Veröffentlichungstag und Bekanntmachung des Hinweises auf die Patenterteilung: **18.07.2001**
(21) Anmeldenummer: 98909301.8
(22) Anmeldetag: 30.01.1998
(51) Int. Cl.: H02K 23/30

(54) **ANKERWICKLUNG FÜR EINEN STROMWENDERMOTOR**
ARMATURE WINDING FOR AN ALTERNATING CURRENT MOTOR
ENROULEMENT D'INDUIT POUR MOTEUR A COLLECTEUR

(30) Priorität: 11.02.1997 DE 19705161
(43) Veröffentlichungstag der Anmeldung: 01.12.1999
(73) Patentinhaber: KRESS-ELEKTRIK GMBH, Elektromotorenfabrik, 72406 Bisingen (DE)
(72) Erfinder: KRESS-ELEKTRIK GMBH, Elektromotorenfabrik, 72406 Bisingen (DE)
(74) Vertreter: Otte, Peter, Dipl.-Ing.
(86) Internationale Anmeldenummer: DE9800269
(87) Internationale Veröffentlichungsnummer: WO9835426

(56) Entgegenhaltungen:
- DE-A- 2 407 141
- US-A- 4 197 475
- US-A- 4 341 971
- PATENT ABSTRACTS OF JAPAN vol. 008, no. 176 (E-260), 14.August 1984 & JP 59 070173 A (HITACHI SEISAKUSHO KK), 20.April 1984,
- BINDER A: "MEASURES TO RAISE BRUSH LIFE OF MODERN DC MACHINES" EUROPEAN TRANSACTIONS ON ELECTRICAL POWER ENGINEERING, Bd. 3, Nr. 3, 1.Mai 1993, Seiten 193-200, XP000376969

## Beschreibung

Die Erfindung bezieht sich auf eine Ankerwicklung für einen Stromwendermotor, gemäß dem Oberbegriff der nebengeordneten Ansprüche 1 bis 3 (JP 6-70 521 A, Patents Abstracts of Japan, E-1563 June 17, 1994, Vol. 18 / No. 320).

Eine Ankerwicklung in der Ausführung einer Trommelwicklung für einen modernen Trommelanker nach Hefner-Alteneck kommt in zwei Arten vor, als Schleifenwicklung und als Wellenwicklung. Universalmotoren, die im besonderen auch bei Elektrohandwerkzeugen Verwendung finden, besitzen vorzugsweise einen Anker mit einer Schleifenwicklung. Elektrowerkzeuge sind oft mit gefährlichen Werkzeugen bestückt und es ist wünschenswert, solche Elektrowerkzeuge nach dem Abschalten schnell abzubremsen, und außerdem das Eigengewicht des Elektrowerkzeugs zu reduzieren.

Aus der DE 42 27 719 C 2 ist eine Schaltungsanordnung zum Bremsen eines Stromwendermotors bekannt. Der Motor ist mittels eines mehrpoligen Umschalters zwischen Motor- und Bremsbetrieb umschaltbar. Wie die Ankerwicklung des Motors im einzelnen ausgebildet ist, geht nicht aus der Patentschrift hervor.

Die Spulen einer Ankerwicklung können aus mehreren Spulenteilen bestehen, vergleiche JP 6-70 521 A, Patents Abstracts of Japan, E-1563 June 17, 1994, Vol. 18 / No. 320. Hier bestehen die Spulen der Ankerwicklung aus mehreren Spulenteilen und die Spulenteile der Ankerspulen sind nacheinander versetzt und mit gleicher Polbildung am Anker angeordnet, wobei die Spulenteile jeweils in gleichen Bereichen der Feldpole angeordnet sind. Die Teilung der Ankerspulen dient hier nicht dem Zweck einer besseren Kommutierung, sondern um die Polzahl des Motors bei einer Anordnung von lediglich zwei Bürsten zu erhöhen.

Zur Erreichung einer ausreichenden Kommutierung bei Universalmotoren mit einer vorbestimmten ausgeprägten Drehrichtung, die unter anderem auch bei Handkreissägen und Winkelschleifern zur Anwendung kommen, wird das Ankerquerfeld zur ablaufenden Seite der Feldpole ausgerichtet, wobei die Ankerschaltung bis zu 45° betragen kann.
Ein derartig ausgerichtetes Ankerquerfeld zur ablaufenden Seite der Feldpole hat die Nachteile, daß hierdurch der Wirkungsgrad gemindert sein kann, und eine elektrodynamische Abbremsung des Motors nach dem Prinzip einer Selbsterregung ist schwierig durchführbar, und während des Bremsbetriebes wird keine ausreichende Kommutierung erreicht.

Daher liegt der Erfindung die Aufgabe zugrunde eine Ankerwicklung für Reihenschlußmotoren zu schaffen, womit eine gute Kommutierung sowohl während des Motorbetriebes als auch während des Bremsbetriebes erzielbar ist, und womit außerdem die Leistungsaufnahme des Motors gesteigert bzw. das Motorengewicht reduziert werden kann.

Diese Aufgabe wird bei einer gattungsgemäßen Einrichtung durch die kennzeichnenden Merkmale der nebengeordneten Patentansprüche 1 bis 3 gelöst.

Weitere Ausgestaltungen der Erfindung sind den übrigen Ansprüchen und der Beschreibung zu entnehmen.

Die Vorteile der erfindungsgemäßen Ankerwicklung für Stromwendermotoren liegen darin, daß unter Verwendung einer Schleifenwicklung eine Ankerwicklung gefunden worden ist, womit bei einem Stromwendermotor sowohl während des Motorbetriebes als auch während des Bremsbetriebes eine gute Kommutierung erreicht wird durch eine beschleunigte Stromwendung in den Ankerspulen durch die Ankerspulen selbst, wobei der Motor nach dem elektrodynamischen Prinzip einer Selbsterregung abbremsbar ist.
Ein weiterer Vorteil ist der, daß mit einer solchen Ankerwicklung die Erwärmung des Ankers reduzierbar ist, und hierdurch die Leistungsaufnahme des Reihenschlußmotors erhöht oder das Motorengewicht reduziert werden kann.

Zur weiteren Erläuterung wird auf die Zeichnung Bezug genommen, in der Ausführungsbeispiele der Erfindung dargestellt sind.

Es zeigt:
- **Fig. 1**: einen Blechschnitt eines Stromwendermotors,
- **Fig. 2**: eine schematische Darstellung der erfindungsgemäßen Ankerwicklung am Anker eines Stromwendermotors,
- **Fig. 3**: eine Abwicklung der erfindungsgemäßen Ankerwicklung,
- **Fig. 4**: einen Kollektorschritt der erfindungsgemäßen Ankerwicklung,
- **Fig. 5**: einen standardgemäßen Kollektorschritt,
- **Fig. 6**: eine Bremsschaltung für einen Stromwendermotor.

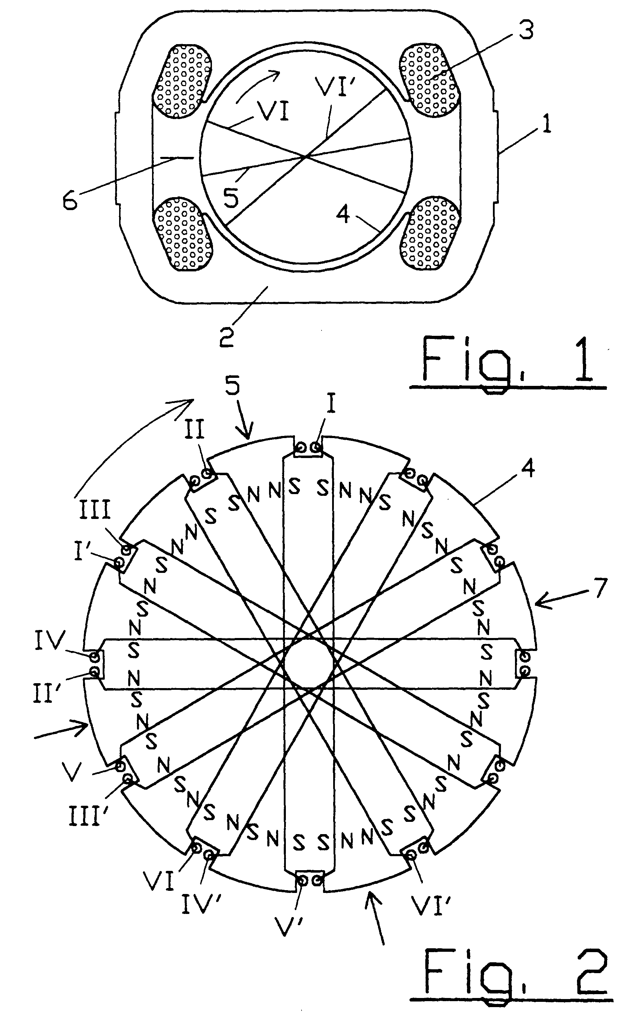

Elektrohandwerkzeuge sind üblicherweise mit einem Universalmotor ausgestattet, da mit einem Reihenschlußmotor dieser Art eine hohe Leistungsdichte erzielbar ist. Zur Erzielung einer guten Kommutierung bei Universalmotoren ist das Ankerquerfeld zur ablaufenden Kante der Feldpole ausgerichtet. Soll nun ein mit einem gefährlichen Werkzeug bestücktes handgeführtes Elektrowerkzeug, beispielsweise ein Winkelschleifer, nach dem Abschalten der Maschine sanft und schnell abgebremst werden, indem der Anker oder die Feldwicklung mittels eines Umschalters umgepolt und der Motor kurzgeschlossen wird, so ist diese Maßnahme bei den bislang verwendeten Universalmotoren schwierig durchführbar.
Um nun solche Motoren sanft und schnell abbremsen zu können, und hierbei eine gute Kommutierung sowohl während des Motorbetriebes als auch während des Bremsbetriebes zu erzielen, wird eine spezielle Ankerwicklung vorgeschlagen und nach den Figuren 1 bis 6 näher beschrieben.

**Fig. 1** zeigt einen Blechschnitt von einem zweipoligen Polpaket 1 eines Reihenschlußmotors. Die Feldpole 2 werden von einer Feldwicklung 3 umschlungen.

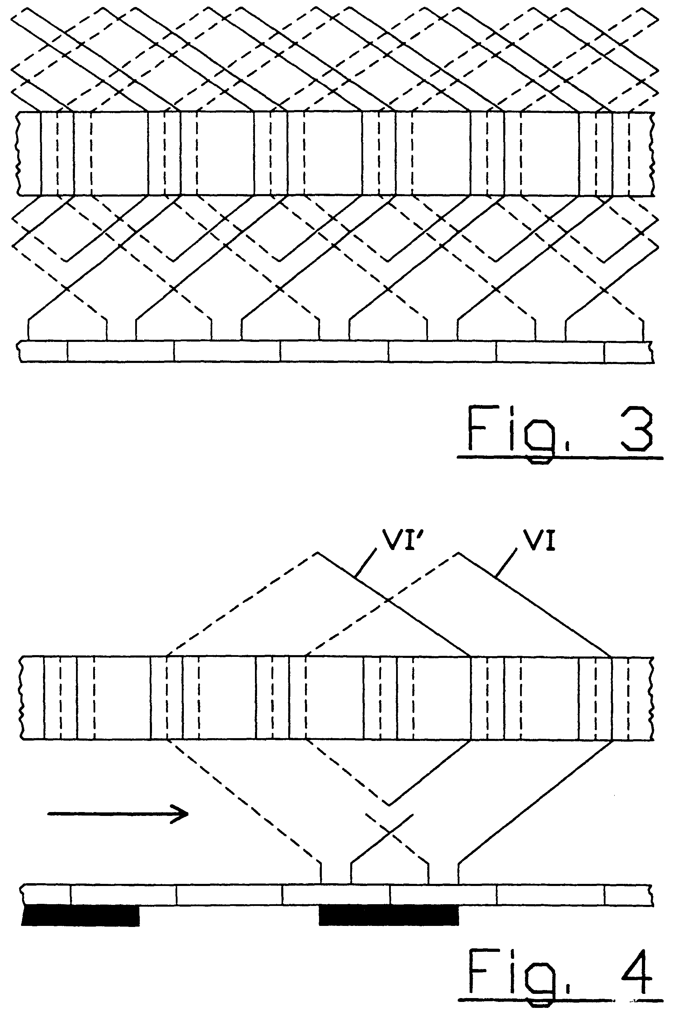

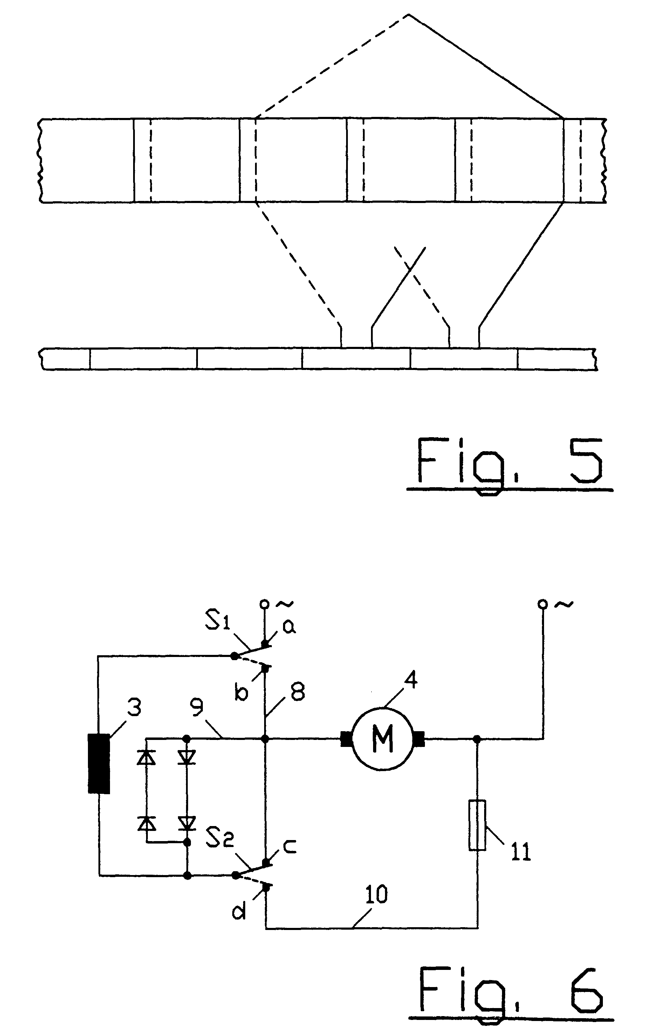

**Fig. 2** zeigt in schematischer Darstellung die erfindungsgemäße Ankerwicklung am Anker 4 eines Stromwendermotors. Zur näheren Veranschaulichung der Ankerwicklung zeigt **Fig.3** eine Abwicklung der erfindungsgemäßen Ankerwicklung. Die abgewickelte Ankerwicklung in der Ausführung einer Schleifenwicklung ist einfachheitshalber an einem sechsnutigen Trommelanker dargestellt und der Ankerwicklung ist ein Kollektor mit sechs Kollektorlamellen zugeordnet. Wie die Ankerwicklung im einzelnen aufgebaut ist, wird durch einen Kollektorschritt in **Fig. 4** dargestellt. Die Spulen der Ankerwicklung bestehen mindestens aus zwei Spulenteilen, wobei der erste Spulenteil VI vor dem zweiten Spulenteil VI', in bezug auf die Drehrichtung des Ankers gesehen, am Anker angeordnet ist, indem der zweite Spulenteil VI' dem ersten Spulenteil VI um eine Nut nachfolgt, somit ist bei einem sechsnutigen Anker der zweite Spulenteil VI' zu dem ersten Spulenteil VI um 60° versetzt am Anker 4 angeordnet, **Fig. 4.** Die Spulenteile der Ankerspulen besitzen jeweils die gleiche Polbildung am Anker. In **Fig. 1** ist die zweigeteilte Ankerspule VI;VI' der **Fig. 4** sinnbildlich am Anker 4 eingezeichnet, wobei die in **Fig. 4** dargestellte zweigeteilte Ankerspule VI;VI' durch die Bürsten kurzgeschlossen ist, und **Fig. 1** zeigt diesen Kollektorschritt kurz vor deren Beendigung, somit befindet sich der erste Spulenteil VI im Bereich der geometrisch neutralen Zone 6, und der zweite Spulenteil VI' ist zur ablaufenden Seite der Feldpole ausgerichtet und zu dem ersten Spulenteil VI um 60° versetzt am Anker angeordnet. Bei dieser Anordnung der geteilten Spulen der Ankerwicklung kann das Ankerquerfeld 5 im Bereich der geometrisch neutralen Zone 6 des Polpaketes ausgerichtet sein, da bei der Stromwendung am Anker jeweils der zweite Spulenteil der Ankerspulen sich in dem Einflußbereich der Feldpole befindet, wird hierdurch eine beschleunigte Stromwendung in den Ankerspulen erzielt.

Eine beschleunigte Stromwendung in den Ankerspulen kann auch durch die Ankerspulen selbst erzielt werden. Eine derartige Wirkungsweise wird durch die Polbildung der Ankerspulen der erfindungsgemäßen Ankerwicklung am Anker 4 in der **Fig. 2** verdeutlicht. Der Anker 4 weist zwölf Nuten auf und am Anker ist lediglich der eine Ankerzweig einer zweipoligen Ankerwicklung sinnbildlich dargestellt. Der zweite Ankerzweig ist nicht dargestellt. Die zweiteiligen Ankerspulen sind durch römische Zahlen gekennzeichnet, wobei die Kennzeichnung ohne Beistrich die ersten Spulenteile und die Kennzeichnung mit Beistrich die zweiten Spulenteile einer Ankerspule darstellen. Das Ankerquerfeld 5 und die neutrale Zone 7 des Ankers sind durch Pfeile gekennzeichnet.

Die Wirkungsweise einer beschleunigten Stromwendung in den Ankerspulen durch die Ankerspulen selbst ist die Folgende:
War die sechste Ankerspule VI;VI' durch die Bürsten am Kollektor kurzgeschlossen und wird durch den nächsten Kollektorschritt die erste Ankerspule I;I' kurzgeschlossen, so sind zu jeder Seite des ersten Spulenteils I der ersten Ankerspule gleichnamige Polfelder vorhanden, die durch die benachbarten Ankerspulen gebildet werden. Da diese gleichnamigen Polfelder sich am Anker gegenüberstehen,wird bei der Kurzschließung der ersten Ankerspule I;I' eine Gegeninduktion im ersten Spulenteil I der ersten Ankerspule durch die benachbarten Ankerspulen bewirkt,die zu einer beschleunigten Stromwendung in der ersten Ankerspule I;I' führt. Dieser Vorgang wiederholt sich bei jedem Kollektorschritt, so daß durch die Ankerspulen selbst eine beschleunigte Stromwendung während des Kommutierungszeitpunktes in den Ankerspulen erfolgt.
Voraussetzung für eine derartige beschleunigte Stromwendung in den Ankerspulen durch die Ankerspulen ist, daß die Ankerspulen mindestens jeweils aus zwei Spulenteilen bestehen, die jeweils mindestens um zwei Ankernuten versetzt am Anker angeordnet sind. Diese Voraussetzungen bewirken bei einem zwölfnutigen Anker ein Ankerquerfeld mit einer Polbildung von jeweils 90°. Da Universalmotoren üblicherweise Feldpole von 120° aufweisen, wird der Wirkungsgrad des Motors bei einem zwölfnutigen Anker mit einer solchen Ankerwicklung etwas gemindert. Vorteilhaft ist somit ein Anker mit einer höheren Nutzahl. Besitzt der Anker beispielsweise achtzehn Nuten, so bewirkt das Ankerquerfeld eine Polbildung am Anker von jeweils 60°.

Mit der erfindungsgemäßen Ankerwicklung, bei der eine beschleunigte Stromwendung in den Ankerspulen auch durch die Ankerspulen selbst erzielbar ist, wird einerseits eine gute Kommutierung sowohl während des Motorbetriebes als auch während des Bremsbetriebes erreicht, und wie die Praxis gezeigt hat, ist andererseits es von besonderem Vorteil, daß eine derartige Ankerwicklung eine geringere Erwärmung gegenüber einer standardgemäßen Ankerwicklung aufweist.

Die erfindungsgemäße Ankerwicklung findet bei allen Auslegungsformen einer Ankerwicklung an einem Trommelanker Anwendung, und sie ist auch für Reihenschlußmotoren anwendbar, die für beide Drehrichtungen bestimmt sind, wenn die Bürsten um die Gradzahl verstellbar sind, um die jeweils der zweite Spulenteil zu dem ersten Spulenteil versetzt am Anker angeordnet ist. Bei einem für beide Drehrichtungen ausgelegten Reihenschlußmotor ohne Bürstenverstellung sind die Spulenteile der Ankerspulen während des Kommutierungszeitpunktes jeweils so zur geometrisch neutralen Zone 6 des Polpaketes 1 ausgerichtet, daß in beide Drehrichtungen die gleichen Kommutierungseigenschaften erzielt werden. Um wieviele Nuten jeweils der zweite Spulenteil vorteilhaft zu dem ersten Spulenteil versetzt am Anker angeordnet sein sollte und wie die Windungszahl des ersten und des zweiten Spulenteils zueinander optimal wäre, ist abhängig von der Auslegung des Reihenschlußmotors.
Die Spulen der Ankerwicklung können auch jeweils aus mehr als zwei Spulenteilen bestehen, wobei dann die Spulenteile vorzugsweise jeweils um eine Nut versetzt mit der gleichen Polbildung am Anker angeordnet sind. Bei mehr als zwei Spulenteilen je Ankerspule kann während des Kommutierungszeitpunktes jeweils der erste Spulenteil oder ein dem ersten Spulenteil nachfolgenden Spulenteil zur geometrisch neutralen Zone 6 des Polpaketes 1 ausgerichtet sein.

Zum Vergleich mit dem Kollektorschritt der **Fig. 4** der erfindungsgemäßen Ankerwicklung zeigt **Fig. 5** eine standardgemäße Ankerspule in bezug auf einen Kollektorschritt.

Zum netzunabhängigen elektrischen Bremsen eines Reihenschlußmotors ist eine entsprechende Schaltungsanordnung notwendig.
**Fig.** 6 zeigt eine solche Schaltungsanordnung zum Abbremsen des Motors mittels eines zweipoligen Umschalters. Die Feldwicklung 3 ist zwischen dem ersten und dem zweiten Umschaltglied S1;S2 angeordnet. Der Arbeitskontakt a des ersten Umschaltglieds S1 ist mit einem ersten Netzanschluß und der Ruhekontakt b des ersten Umschaltglieds S1 ist über eine Brücke 8 mit dem Arbeitskontakt c des zweiten Umschaltglieds S2 und dem ersten Anschluß des Ankers 4 verbunden, wobei mit der Brücke 8 der erste Anschluß des Strompfads 9 verbunden ist. Der zweite Anschluß des Strompfads 9 ist mit dem zweiten Umschaltglied S2 verbunden, während der zweite Anschluß des Ankers 4 mit einem zweiten Netzanschluß und über eine Kurzschlußbrücke 10 mit dem Ruhekontakt d des zweiten Umschaltglieds S2 verbunden ist. Im Strompfad 9 befindet sich eine in Wechselrichtung geschaltete Diodenanordnung. Diese Diodenanordnung bezweckt einen Spannungsrückstand zur Felderregung während der Bremsphase des Reihenschlußmotors. Um bei einem Defekt der Schaltungsanordnung ein unmittelbares Kurzschließen des Motors zu verhindern, kann in der Kurzschlußbrücke 10 eine Sicherung 11 angeordnet sein.
Eine sanfte Schnellabbremsung wird erreicht durch die Anordnung des Ankerquerfeldes im Bereich der geometrisch neutralen Zone 6 des Polpakets, womit eine maximale Induktion der Ankerwicklung durch die Feldpole erreicht wird, hierdurch ist lediglich nur eine geringe Erregung der Feldpole für eine Schnellabbremsung erforderlich.

Die beschriebene erfindungsgemäße Ankerwicklung findet nicht nur bei Universalmotoren für Elektrohandwerkzeuge Anwendung, sondern die erfindungsgemäße Ankerwicklung kann bei allen Arten und Auslegungsformen eines Stromwendermotors zur Anwendung kommen, und ein solcher Stromwendermotor findet eine vielseitige Verwendung.

## Patentansprüche

1. Ankerwicklung für einen Stromwendermotor, mit Spulen aus mehreren Spulenteilen, die nacheinander versetzt mit gleicher Polbildung am Anker angeordnet sind, wobei der Stromwendermotor mittels eines mehrpoligen Umschalters zwischen Motor- und Bremsbetrieb umschaltbar ist,
dadurch gekennzeichnet,
daß die Ankerspulen jeweils aus mindestens zwei Spulenteilen bestehen und die Spulenteile der jeweiligen Ankerspule mindestens um zwei Ankernuten versetzt mit gleicher Polbildung am Anker angeordnet sind, so daß unmittelbar vor dem Kommutierungszeitpunkt der Ankerspulen jeweils dem einen Spulenteil der zu kommutierenden Ankerspule zu jeder Seite gleichnamige Polfelder, die durch die benachbarten Ankerspulen gebildet werden, gegenüberstehen, und hierdurch eine beschleunigte Stromwendung in den Ankerspulen erzielt wird.

2. Ankerwicklung für einen Stromwendermotor, mit Spulen aus mehreren Spulenteilen, die nacheinander versetzt mit gleicher Polbildung am Anker angeordnet sind, wobei der Stromwendermotor für eine vorbestimmte ausgeprägte Drehrichtung ausgelegt ist,
dadurch gekennzeichnet,
daß die Spulenteile der Ankerspulen derart nacheinander versetzt und mit gleicher Polbildung am Anker (4) so angeordnet sind, daß im Kommutierungszeitpunkt der Ankerspulen jeweils die ersten Spulenteile der Ankerspulen sich im Bereich der geometrisch neutralen Zone (6) des Polpakets (1) befinden und die nachfolgenden Spulenteile der jeweiligen Ankerspule sich im Einflußbereich der ablaufenden Seite der Feldpole (2) befinden, so daß bei der Stromwendung in den Ankerspulen jeweils in die den ersten Spulenteilen nachfolgenden Spulenteile eine Spannung durch die Polfelder des Polpakets (1) zur beschleunigten Stromwendung induziert wird.

3. Ankerwicklung für einen Stromwendermotor, mit Spulen aus mehreren Spulenteilen, die nacheinander versetzt mit gleicher Polbildung am Anker angeordnet sind, wobei der Stromwendermotor für beide Drehrichtungen ausgelegt ist,
dadurch gekennzeichnet,
daß die Spulenteile der Ankerspulen derart nacheinander versetzt und mit gleicher Polbildung am Anker (4) so angeordnet sind, daß im Kommutierungszeitpunkt der Ankerspulen jeweils die Spulenteile der Ankerspulen so zur geometrisch neutralen Zone (6) des Polpakets (1) ausgerichtet sind, daß in beide Drehrichtungen des Motors die gleichen Kommutierungseigenschaften erzielt werden.

4. Ankerwicklung nach Anspruch 1 bis 3,
dadurch gekennzeichnet, daß jede Ankerspule der Ankerwicklung aus zwei Spulenteilen oder aus mehr als zwei Spulenteilen bestehen, und die Endanschlüsse der benachbarten Ankerspulen mit benachbarten Kollektorlamellen verbunden sind.

5. Ankerwicklung nach Anspruch 1 bis 4,
dadurch gekennzeichnet, daß die Spulenteile der Ankerspulen jeweils um eine Ankernut bzw. jeweils um mehrere Ankernuten versetzt am Anker angeordnet sind.

6. Ankerwicklung nach Anspruch 1 bis 5,
dadurch gekennzeichnet, daß die Windungszahl der Spulenteile der Ankerspulen zueinander gleich ist bzw. ungleich sein kann.

7. Ankerwicklung nach Anspruch 1 bis 6,
dadurch gekennzeichnet, daß im Kommutierungszeitpunkt der Ankerspulen mindestens ein Spulenteil bzw. mehrere Spulenteile der jeweiligen Ankerspule sich im Einflußbereich der Feldpole befindet/befinden.

8. Ankerwicklung nach Anspruch 1 bis 7,
dadurch gekennzeichnet, daß im Kommutierungszeitpunkt der Ankerspulen jeweils der erste Spulenteil der Ankerspulen oder *ein dem ersten* Spulenteil *nachfolgender Spulenteil* zur geometrisch neutralen Zone (6) des Polpaketes ausgerichtet ist.

9. Ankerwicklung nach Anspruch 1 bis 8,
dadurch gekennzeichnet, daß bei einem Reihenschlußmotor, der für beide Drehrichtungen bestimmt ist, die Bürsten um die Gradzahl verstellbar sind, um die jeweils die Spulenteile der Ankerspulen zueinander versetzt am Anker angeordnet sind.

10. Ankerwicklung nach Anspruch 1 bis 9,
dadurch gekennzeichnet, daß die Ankerwicklung mit den unterteilten Ankerspulen bei allen Auslegungsformen eines Stromwendermotors Anwendung findet.

## Claims

1. An armature winding for a commutator motor, with coils comprising a plurality of coil parts which are arranged offset in succession with the same pole formation on the armature, the commutator motor being able to be changed over between motor and braking operation by means of a multiple-pole change-over switch, **characterized in that** the armature coils each comprise at least two coil parts and the coil parts of the respective armature coil are arranged offset around at least two armature slots and with the same pole formation on the armature, so that immediately before the commutation moment of the armature coils polar fields of the same polarity, which are formed by the adjacent armature coils, are opposite one respective coil part of the armature coil to be commutated on each side, and this results in accelerated commutation of current in the armature coils.

2. An armature winding for a commutator motor, with coils comprising a plurality of coil parts which are arranged offset in succession with the same pole formation on the armature, the commutator motor being designed for a pre-determined characteristic direction of rotation, **characterized in that** the coil parts of the armature coils are offset in succession in such a way and are arranged with the same pole formation on the armature (4) in such a way that at the commutation moment of the armature coils the first coil parts of the armature coils are present in each case in the region of the geometrically neutral zone (6) of the pole package (1) and the subsequent coil parts of the respective armature coil are situated in the sphere of influence of the trailing side of the field poles (2), so that during the commutation of current in the armature coils a voltage is induced by the polar fields of the pole package (1) into the coil parts following the first coil parts in each case for accelerated commutation of current.

3. An armature winding for a commutator motor, with coils comprising a plurality of coil parts which are arranged offset in succession with the same pole formation on the armature, the commutator motor being designed for both directions of rotation, **characterized in that** the coil parts of the armature coils are offset in succession in such a way and are arranged with the same pole formation on the armature (4) in such a way that at the commutation moment of the armature coils the coil parts of the armature coils are orientated in each case towards the geometrically neutral zone (6) of the pole package (1) in such a way that the same commutation characteristics are achieved in both directions of rotation of the motor.

4. An armature winding according to Claims I to 3, **characterized in that** each armature coil of the armature winding comprises two coil parts or more than two coil parts, and the terminals of the adjacent armature coils are connected to adjacent collector bars.

5. An armature winding according to Claims 1 to 4, **characterized in that** the coil parts of the armature coils are arranged offset in each case around an armature slot or around a plurality of armature slots on the armature.

6. An armature winding according to Claims I to 5, **characterized in that** the number of windings of the coil parts of the armature coils is equal to one another or can be unequal.

7. An armature winding according to Claims 1 to 6, **characterized in that** at the commutation moment of the armature coils at least one coil part or a plurality of coil parts of the respective armature coil is or are present in the sphere of influence of the field poles.

8. An armature winding according to Claims 1 to 7, **characterized in that** at the commutation moment of the armature coils the first coil part of the armature coils or a coil part following the first coil part is orientated in each case towards the geometrically neutral zone (6) of the pole package.

9. An armature winding according to Claims 1 to 8, **characterized in that** in the case of a series-wound motor, which is intended for both directions of rotation, the brushes are adjustable by the number of degrees by which the coil parts of the armature coils are arranged offset to one another on the armature.

10. An armature winding according to Claims 1 to 9, **characterized in that** the armature winding with the subdivided armature coils is usable in all designs of a commutator motor.

## Revendications

1. Enroulement d'induit pour un moteur à collecteur, comportant des bobines formées de plusieurs parties de bobine décalées les unes par rapport aux autres sur l'induit en formant les pôles, le moteur à collecteur commutant, à l'aide d'un commutateur multipolaire, entre le mode moteur et le mode frein,
caractérisé en ce que
les bobines d'induit sont formées chaque fois d'au moins deux parties décalées d'au moins deux rainures d'induit en formant le même pôle sur l'induit de sorte que, directement avant l'instant de commutation des bobines d'induit, chaque fois pour une partie de la bobine d'induit à commuter, les champs polaires sont de même signe de chaque côté et sont formés par les bobines d'induit voisines qui se font face, pour accélérer ainsi l'inversion du courant dans les bobines d'induit.

2. Enroulement d'induit pour un moteur à collecteur, comportant des bobines formées de plusieurs parties décalées successivement en formant le même pôle sur l'induit, le moteur à collecteur étant conçu dans le sens de rotation accentué, prédéterminé,
caractérisé en ce que
les parties des bobines d'induit sont décalées les une par rapport aux autres et forment le même pôle sur l'induit (4) pour qu'à l'instant de commutation des bobines d'induit, chaque fois les premières parties des bobines d'induit se trouvent dans la zone géométrique neutre (6) du paquet polaire (1) et que les parties de bobine suivantes de la bobine d'induit respective se trouve dans la zone d'influence du côté « sortant » des pôles de champs (2), de façon qu'en cas d'inversion de courant dans les bobines d'induit, chaque fois dans les parties de bobine qui suivent la première partie de bobine, les champs polaires du paquet polaire (1) engendrent une tension pour accélérer l'inversion du courant.

3. Enroulement d'induit pour un moteur à collecteur, comportant des bobines formées de plusieurs parties décalées successivement en formant le même pôle sur l'induit, le moteur à collecteur étant conçu pour tourner dans les deux sens de rotation,
caractérisé en ce que
les parties des bobines d'induit sont décalées successivement et sont montées sur l'induit (4) en formant le même pôle pour qu'à l'instant de la commutation des bobines d'induit, les parties des bobines d'induit soient alignées respectivement sur la zone géométrique neutre (6) du paquet polaire (4), de manière à avoir les mêmes propriétés de commutation dans les deux sens de rotation du moteur.

4. Enroulement d'induit selon l'une quelconque des revendications 1 à 3,
caractérisé en ce que
chaque bobine d'enroulement d'induit se compose d'au moins deux parties, et les connections d'extrémité des bobines d'induit voisines sont reliées aux lamelles de collecteur voisines.

5. Enroulement d'induit selon l'une quelconque des revendications 1 à 4,
caractérisé en ce que
les parties de bobine d'induit sont chaque fois décalées sur l'induit d'une rainure d'induit, ou chaque fois de plusieurs rainures d'induit.

6. Enroulement d'induit selon l'une quelconque des revendications 1 à 5,
caractérisé en ce que
le nombre de tours des parties de bobine d'induit entre elles peut être le même ou différent.

7. Enroulement d'induit selon l'une quelconque des revendications 1 à 6,
caractérisé en ce qu'
à l'instant de la commutation des bobines d'induit, au moins une partie ou plusieurs parties de chaque bobine d'induit se trouvent dans la zone d'influence du champ polaire.

8. Enroulement d'induit selon l'une quelconque des revendications 1 à 7,
caractérisé en ce qu'
à l'instant de la commutation des bobines d'induit, chaque fois la première partie de bobine d'induit ou une partie de bobine à la suite de la première partie de bobine, est alignée par rapport à la zone géométrique neutre (6) du paquet polaire.

9. Enroulement d'induit selon l'une quelconque des revendications 1 à 8,
caractérisé en ce que
dans le cas d'un moteur série, destiné à tourner dans les deux sens de rotation, les balais sont réglables selon le nombre pair sur lequel les parties de bobine d'induit sont installées de manière décalée sur l'induit.

10. Enroulement d'induit selon l'une quelconque des revendications 1 à 9,
caractérisé en ce que
l'enroulement d'induit avec les bobines subdivisées, est applicable à toutes les formes de réalisation d'un moteur à collecteur.
